# EUROPEAN PATENT SPECIFICATION

(11) **EP 2 746 097 B1**
(45) Date of publication and mention of the grant of the patent: **28.10.2015**
(21) Application number: 13005986.8
(22) Date of filing: 20.12.2013
(51) Int. Cl.: B60N 2/28, B60N 2/42, B60N 2/427

(54) **Mechanical side impact protection for a child restraint**
Mechanischer Seitenaufprallschutz für eine Kinderrückhalteeinrichtung
Protection contre les chocs latéraux mécaniques pour dispositif de sécurité pour enfant

(30) Priority: 21.12.2012 AU 2012905625
(43) Date of publication of application: 25.06.2014
(73) Proprietor: Britax Childcare Pty Ltd., Sunshine, VIC 3020 (AU)
(72) Inventor: Maciejczyk, Wieslaw, Sunshine, Victoria 3020 (AU)
(74) Representative: Bosch, Matthias

(56) References cited:
- EP-A1- 0 003 354
- EP-A1- 0 470 413
- DE-A1-102007 023 902
- DE-U1-202012 102 471
- US-A- 3 623 768
- US-A- 5 499 840
- US-A- 5 505 487
- US-A- 5 516 194
- US-A1- 2006 038 428
- US-A1- 2009 134 678

## Description

### TECHNICAL FIELD

The present invention relates to a child restraint for use in an automobile or the like, (see, for example, DE 20 2012 102 471 U1, which corresponds to the preamble of claim 1).

In a particular form the present invention relates to improvements to side impact protection of an occupant in the event of an accident.

### BACKGROUND

Child restraints have been developed to improve the safety of children traveling in vehicles. A variety of different types of child restraints have been developed for this purpose, with most child restraints consisting of a seat or chair which is supported on a rear seat of a vehicle, for receiving the child therein. There exists a variety of types of child safety seats that are approved for use with children of a variety of ages and/or sizes.

Type A seats typically refer to rear facing seats or capsules suitable for accommodating babies/infants up to around 6 months of age and/or 70 cm in length and up to 12 kg.

Type B seats typically refer to forward facing seats used to accommodate toddlers and young children from approximately 6 months to 4 years, or from 8 - 18 kg.

Type E seats typically refer to boosted seats and booster cushions used to accommodate children between 4 - 8 years old, or approximately from 14 - 32 kg, and which are typically used in c combination with the vehicle seat belt.

Some seats may be a combination type A/B or B/E to accommodate a child as the child grows thereby avoiding the need to purchase, or otherwise source, a variety of different seats to accommodate a growing child.

In many child safety seats, the child is restrained in the safety seat by a harness connected to a body or shell of the safety seat. The seat shell itself is typically connected to the vehicle by means of the vehicle seat belt, an ISOFIX system or similar, and/or a tether strap connected to the shell and extending to a vehicle anchorage point, where the tether strap is attached thereto using a latching hook connector.

Child restraints are typically secured in a position in a vehicle which is considerably closer to a side of a vehicle than either of a front or a rear of the vehicle, making occupants somewhat more vulnerable to accidents involving impacts incident to the side of the vehicle.

It is against this background and the problems and difficulties associated therewith that the present invention has been developed.

Certain objects and advantages of the present invention will become apparent from the following description, taken in connection with the accompanying drawings, wherein, by way of illustration and example, an embodiment of the present invention is disclosed.

### SUMMARY

According to the invention as defined in claim 1, there is provided a child restraint for a vehicle comprising a body for supporting an occupant, a member extending outwardly (or projecting) from the body and retractable with respect to the body, and a means for providing at least some resistance to any retraction of the member, wherein the extent of outward projection of the member from the body is adjustable. In this way the member can be set to project sufficient to rest against a part of a vehicle interior. Furthermore, the child restraint further comprises means for dissipating any kinetic energy of any movement (particularly retraction) of the projecting member.

Additional features of the invention are disclosed in the dependent claims.

In one form, the projecting member retracts into the body.

In one form, the member projects relative to and/or from a side of the body.

In one form, the member projects relative to and/or from a back or rear of the body.

In one form, the member projects relative to and/or from a forward most part of the body.

In one form, the member projects relative to and/or from an uppermost part of the body.

In one form, the member will not retract until crash induced forces reach or exceed a given threshold value.

In one form, resistance to retraction increases as the member retracts.

In one form, in an alternative, the child restraint further comprises means for biasing the member outwardly. This biasing means may take the form of an elastic element such as mechanical or gas spring acting on the member.

In one form, the child restraint comprises a bore from which the projecting member extends.

In one form, the projecting member comprises a shaft and a head, and the shaft projects from the bore.

In one form, the shaft and the bore are threadably engaged. In one form, the means for providing at least some resistance to any retraction of the member involves stripping of the threads.

In one form, the projecting member comprises a piston disposed within the bore. In one form, the means for providing at least some resistance to any retraction of the member involves compression of a fluid trapped between the piston and the bore.

In one form, the member serves as an actuator for a passive safety feature.

In one form, the body of the child restraint is a seat.

In one form, the body of the child restraint is a capsule.

In one form, the body comprises a pair of opposing, outwardly directed sides, and at least one member projects from each of these.

A detailed description of one or more embodiments of the invention is provided below along with accompanying figures that illustrate by way of example the principles of the invention. While the invention is described in connection with such embodiments, it should be understood that the invention is not limited to any embodiment. On the contrary, the scope of the invention is limited only by the appended claims. For the purpose of example, numerous specific details are set forth in the following description in order to provide a thorough understanding of the present invention.

The present invention may be practiced according to the claims without some or all of these specific details. For the purpose of clarity, technical material that is known in the technical fields related to the invention has not been described in detail so that the present invention is not unnecessarily obscured.

### BRIEF DESCRIPTION OF DRAWINGS

Embodiments of the present invention will be discussed with reference to the accompanying drawings wherein:
Figure 1 is a schematic perspective view of a child restraint;
Figure 2 is a cross-sectional view taken through the child restraint of Figure 1 along line A-A;
Figure 3 is a schematic perspective view of a child restraint according to a further illustrative embodiment of the invention; and
Figure 4 is a cross-sectional view taken through the child restraint of Figure 3 along line B-B.
In the following description, like reference characters designate like or corresponding parts throughout the figures.

### DESCRIPTION OF EMBODIMENTS

The present invention will be described below in relation to a Type-B and/or E child safety seat 1 for use in a vehicle in a forward facing manner. However, it will be appreciated that the present invention could be equally applicable for use in a variety of different modes of child safety seats, including Type A/B, Type A/B/E etc.

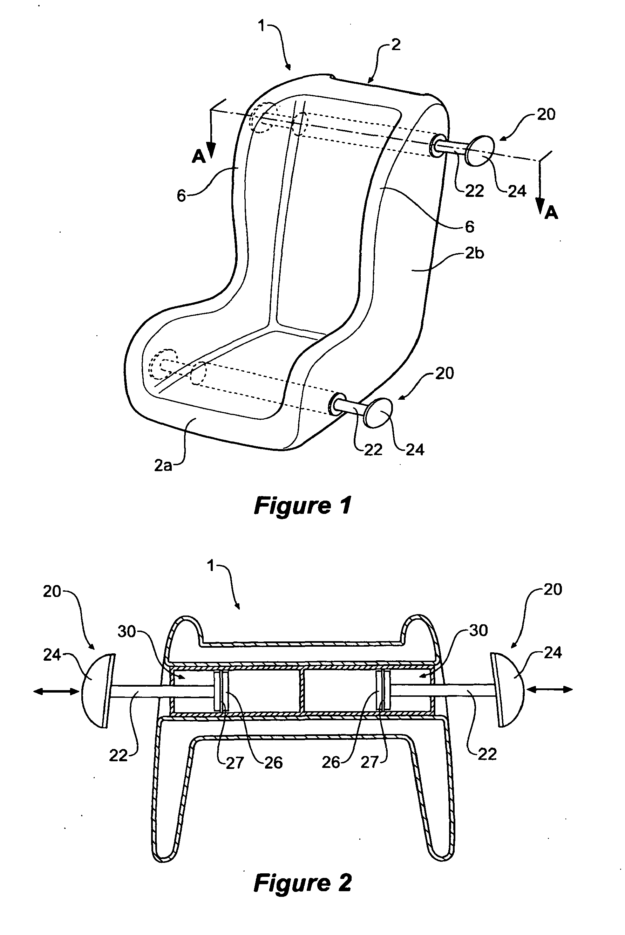

Referring now to Figures 1 through 4, where there is illustrated a child restraint in the form of a child safety seat 1 comprising an inbuilt harness, where the child safety seat 1 is for use with a seatbelt equipped vehicle seat by being positioned thereon and retained thereto using the vehicle's seat belts and a tether strap extending from the child safety seat 1 to a vehicle mounting point.

The child safety seat 1 comprises a seat body 2 (also commonly referred to as a shell) comprising a seat base 2a, a seat back portion 2b, and a pair of side wings 6 extending forward of the seat back portion 2b and upward from the seat base portion 2a. The seat body 2 will typically be covered with padding and a dress cover.

The seat 1 forms a pair of opposing sides having outwardly directed faces. From each of these faces there extends a pair of projecting members (or bumpers) 20, one being positioned high on the body 2, and the other low.

Because each of the projecting members 20 is substantially identical, only one of these need be described in detail.

There is a bore 30 extending into the back portion 2b (in the case of an upper projecting member 20) of the seat body 2 from each of the outwardly directed faces. This bore 30 may be molded into the plastic seat shell which constitutes the seat body 2, or formed into a separate component which is attached to the body 2.

From the bore 30 there extends a shaft 22 of the projecting member 20, the shaft 22 terminating in an outermost head 24.

Inwardly, the shaft terminates in a piston 26 which is slidably disposed within the bore 30 and sealed against the bore 30 with O-rings 27 so that a column of fluid (air in this case) is trapped between the piston 26 and the bore 30.

Sufficient stiction (static friction) exists between these seals 27 and the bore 30 that the extent of projection of the projecting member 20 can be selected and set as required.

With the seat 1 installed in the vehicle, the projecting member 20 can be extended by pulling this outward until the head 24 comes into contact with a portion of the vehicle interior, or until the shaft 22 reaches the end of its travel, whichever is reached first.

In the event that the vehicle is involved in an accident involving an impact incident to the side thereof, the piston 26 will be driven inward to compress the air trapped between itself and the bore 30. This air may be released through a valve or small holes in the bore 30, but the resultant effect will be to absorb at least some of the impact energy.

In a non-illustrated embodiment, the fluid can be driven from the bore and used to inflate a cushioning element (such as a flexible bag) which is either directed inwardly toward the occupant or externally.

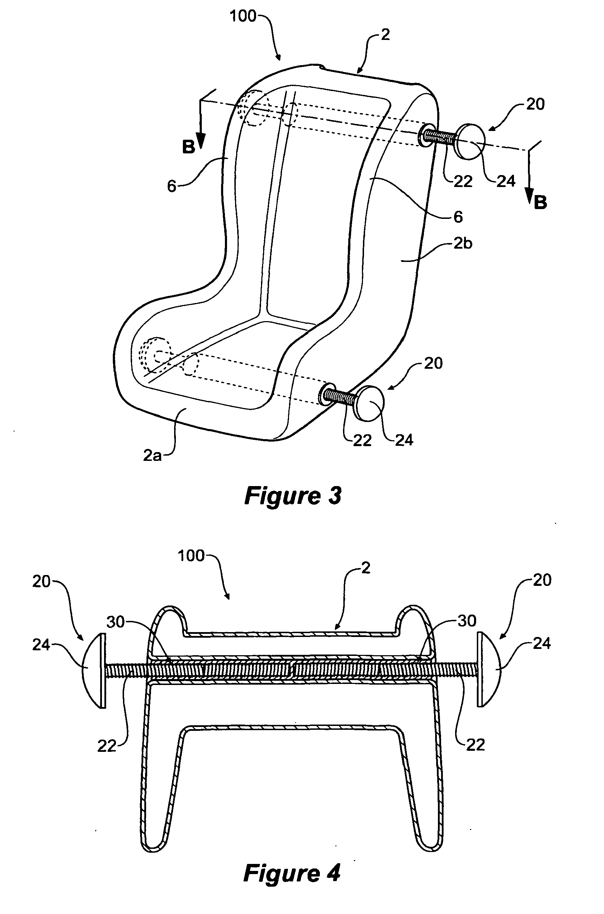

Referring now to Figures 3 and 4, which illustrate an additional embodiment of the invention. Since most of the parts of the child safety seat 100 shown in Figures 3 and 4 are identical to corresponding parts shown in the seat 1 of Figures 1 and 2, they are denoted by the same reference numerals and will not be described again in detail.

Both the shaft 22 and the bore 30 of child safety seat 100 are threadably engaged, so that the extent to which the member 20 projects can be adjusted by rotating the member via the head 24.

With the seat 100 installed in the vehicle, the projecting member 20 can be extended by winding this out until the head comes into contact with a portion of the vehicle interior, or until the shaft reaches the end of its travel, whichever is reached first.

In the event that the vehicle is involved in an accident involving an impact incident to the side thereof, the projecting member 20 will resist being driven inward until such time as the threads strip. Optionally a compression spring (not illustrated) may be positioned in the bore 30 so as to act against the shaft 22 and provide resistance to retraction of the projecting member 20. The resultant effect will be to absorb at least some of the impact energy.

In a further non-illustrated embodiment, the projecting member may combine features of the above described embodiments, such as by employing both a threadably engaged shaft and bore pairing, and a piston at the end of the shaft. That is to say, the bore would be threaded towards its outer end, and smooth towards its inner end.

Accordingly, the present invention provides impact protection in the event that a vehicle is involved in an accident involving an impact incident to the side of the vehicle.

Throughout the specification and the claims that follow, unless the context requires otherwise, the words "comprise" and "include" and variations such as "comprising" and "including" will be understood to imply the inclusion of a stated integer or group of integers, but not the exclusion of any other integer or group of integers.

The reference to any prior art in this specification is not, and should not be taken as, an acknowledgement of any form of suggestion that such prior art forms part of the common general knowledge.

It will be appreciated by those skilled in the art that the invention is not restricted in its use to the particular application described. Neither is the present invention restricted in its preferred embodiment with regard to the particular elements and/or features described or depicted herein. It will be appreciated that the invention is not limited to the embodiment or embodiments disclosed, but is capable of numerous rearrangements, modifications and substitutions if thereby not departing from the scope of the invention as set forth and defined by the following claims.

## Claims

1. A child restraint (1) for a vehicle, said child restraint (1) comprising a body (2) for supporting an occupant, a member (20) extending outwardly from the body (2) and substantially retractable with respect to the body (2), and a means (27 ; 22) for providing at least some resistance to any retraction of, the member (20), wherein the extent of outward projection of the member (20) from the body (2) is adjustable, and wherein in use, the extent of outward projection of the member (20) is adjusted and set, and the child restraint (1) is **characterised in that** it further comprises a means (26 ; 30) for dissipating at least some kinetic energy of a retraction of the projecting member (20).

2. The child restraint (1) of claim 1, wherein the projecting member (20) retracts into the body (2).

3. The child restraint (1) as in any one of the preceding claims, wherein the member (20) projects relative to and/or from a side of the body (2).

4. The child restraint (1) as in any one of the preceding claims, wherein the said means for providing at least some resistance to any retraction of the member (20) also biases the member (20) outwardly.

5. The child restraint (1) as in any one of claims 1 through 3, wherein the child restraint (1) further comprises means for biasing the member (20) outwardly.

6. The child restraint (1) as in any one of the preceding claims, wherein the child restraint comprises a bore (30) from which the projecting member (20) extends.

7. The child restraint (1) of claim 6, wherein the projecting member (20) comprises a shaft (22) and a head (24), and the shaft (22) projects from the bore (30).

8. The child restraint (1) of claim 7, wherein the shaft (22) and the bore (30) are threadably engaged.

9. The child restraint (1) of claim 6 or 8, wherein the projecting member (20) further comprises a piston (26) disposed within the bore (30), and which traps a fluid between itself and the bore (30).

10. The child restraint (1) of claim 9, wherein in the event that the piston (26) is driven inwardly, the fluid is driven from the bore (30) into a cushioning member or the like.

11. The child restraint (1) as in any one of the preceding claims, wherein the body (2) comprises a pair of opposing sides (6) having outwardly directed faces and at least one member (20) projects from each of these.

12. The child restraint (1) as in any one of the preceding claims, wherein the body (2) provides a seat.

13. The child restraint (1) as in any of claims 1 through 11, wherein the body (2) provides an infant capsule.

## Patentansprüche

1. Kinderrückhaltevorrichtung (1) für ein Fahrzeug, wobei die Kinderrückhaltevorrichtung (1) einen Körper (2) zum Stützen eines Insassen aufweist, ein Element (20), das sich von dem Körper (2) nach außen erstreckt und bezüglich des Körpers (2) im Wesentlichen zurückziehbar ist, und eine Einrichtung (27; 22) zum Bereitstellen wenigstens eines gewissen Widerstands gegenüber dem Zurückziehen des Elements (20), wobei das Ausmaß des nach außen Vorstehens des Elements (20) von dem Körper (2) einstellbar ist, und wobei im Gebrauch das Ausmaß des nach außen Vorstehens des Elements (20) eingestellt und festgelegt ist, und wobei die Kinderrückhaltevorrichtung (1) **dadurch gekennzeichnet ist, dass** sie des Weiteren eine Einrichtung (26; 30) zum Ableiten wenigstens einiger kinetischer Energie eines Zurückziehens des vorstehenden Elements (20) aufweist.

2. Kinderrückhaltevorrichtung (1) nach Anspruch 1, wobei das vorstehende Element (20) in den Körper (2) zurückfährt.

3. Kinderrückhaltevorrichtung (1) nach einem der vorhergehenden Ansprüche, wobei das Element (20) bezüglich und/oder von einer Seite des Körpers (2) vorsteht.

4. Kinderrückhaltevorrichtung (1) nach einem der vorhergehenden Ansprüche, wobei die Einrichtung zum Bereitstellen wenigstens eines gewissen Widerstands gegenüber dem Zurückziehen des Elements (20) das Element (20) auch nach außen vorspannt.

5. Kinderrückhaltevorrichtung (1) nach einem der Ansprüche 1 bis 3, wobei die Kinderrückhaltevorrichtung (1) des Weiteren eine Einrichtung zum Vorspannen des Körpers (20) nach außen aufweist.

6. Kinderrückhaltevorrichtung (1) nach einem der vorhergehenden Ansprüche, wobei die Kinderrückhaltevorrichtung eine Bohrung (30) aufweist, von der sich das vorstehende Element (20) erstreckt.

7. Kinderrückhaltevorrichtung (1) nach Anspruch 6, wobei das vorstehende Element (20) einen Schaft (22) und einen Kopf (24) aufweist und der Schaft (22) von der Bohrung (30) vorsteht.

8. Kinderrückhaltevorrichtung (1) nach Anspruch 7, wobei der Schaft (22) und die Bohrung (30) in Gewindeeingriff stehen.

9. Kinderrückhaltevorrichtung (1) nach Anspruch 6 oder 8, wobei das vorstehende Element (20) des Weiteren einen Kolben (26) aufweist, der in der Bohrung (30) angeordnet ist, und der ein Fluid zwischen sich selbst und der Bohrung (30) einschließt.

10. Kinderrückhaltevorrichtung (1) nach Anspruch 9, wobei in dem Fall, in dem der Kolben (26) nach innen getrieben wird, das Fluid von der Bohrung (30) in ein Kissenelement oder dergleichen getrieben wird.

11. Kinderrückhaltevorrichtung (1) nach einem der vorhergehenden Ansprüche, wobei der Körper (2) ein Paar gegenüberliegender Seiten (6) aufweist, die nach außen gerichtete Flächen haben, und wenigstens ein Element (20) von jedem von ihnen vorsteht.

12. Kinderrückhaltevorrichtung (1) nach einem der vorhergehenden Ansprüche, wobei der Körper (2) einen Sitz bereitstellt.

13. Kinderrückhaltevorrichtung (1) nach einem der Ansprüche 1 bis 11, wobei der Körper (2) eine Babyschale bereitstellt.

## Revendications

1. Système (1) de retenue pour enfant pour un véhicule, ledit système (1) de retenue pour enfant comprenant un corps (2) pour supporter un occupant, un élément (20) s'étendant vers l'extérieur à partir du corps (2) et sensiblement rétractable par rapport au corps (2), et un moyen (27 ; 22) pour offrir au moins une certaine résistance à une quelconque rétraction de l'élément (20), dans lequel l'étendue de projection vers l'extérieur de l'élément (20) par rapport au corps (2) est ajustable, et dans lequel, à l'utilisation, l'étendue de projection vers l'extérieur de l'élément (20) est ajustée et fixée, et le système (1) de retenue pour enfant est **caractérisé en ce qu'**il comprend en outre un moyen (26 ; 30) pour dissiper au moins quelque énergie cinétique d'une rétraction de l'élément (20) de projection.

2. Système (1) de retenue pour enfant selon la revendication 1, dans lequel l'élément (20) de projection se rétracte dans le corps (2).

3. Système (1) de retenue pour enfant selon l'une quelconque des revendications précédentes, dans lequel l'élément (20) se projette vers un et/ou à partir d'un côté du corps (2).

4. Système (1) de retenue pour enfant selon l'une quelconque des revendications précédentes, dans lequel ledit moyen pour offrir au moins une certaine résistance à une quelconque rétraction de l'élément (20) pousse également l'élément (20) vers l'extérieur.

5. Système (1) de retenue pour enfant selon l'une quelconque des revendications 1 à 3, dans lequel le système (1) de retenue pour enfant comprend en outre un moyen pour pousser l'élément (20) vers l'extérieur.

6. Système (1) de retenue pour enfant selon l'une quelconque des revendications précédentes, dans lequel le système de retenue pour enfant comprend un alésage (30) à partir duquel l'élément (20) de projection s'étend.

7. Système (1) de retenue pour enfant selon la revendication 6, dans lequel l'élément (20) de projection comprend un arbre (22) et une tête (24), et l'arbre (22) se projette à partir de l'alésage (30).

8. Système (1) de retenue pour enfant selon la revendication 7, dans lequel l'arbre (22) et l'alésage (30) sont engagés par filetage.

9. Système (1) de retenue pour enfant selon la revendication 6 ou 8, dans lequel l'élément (20) de projection comprend en outre un piston (26) disposé à l'intérieur de l'alésage (30), et qui piège un fluide entre lui-même et l'alésage (30).

10. Système (1) de retenue pour enfant selon la revendication 9, dans lequel, dans le cas où le piston (26) est entraîné vers l'intérieur, le fluide est entraîné de l'alésage (30) jusque dans un élément d'amortissement ou similaire.

11. Système (1) de retenue pour enfant selon l'une quelconque des revendications précédentes, dans lequel le corps (2) comprend une paire de côtés (6) opposés ayant des faces orientées vers l'extérieur et au moins un élément (20) se projette à partir de chacun de ceux-ci.

12. Système (1) de retenue pour enfant selon l'une quelconque des revendications précédentes, dans lequel le corps (2) offre un siège.

13. Système (1) de retenue pour enfant selon l'une quelconque des revendications 1 à 11, dans lequel le corps (2) offre une capsule pour nourrisson.
